# EUROPEAN PATENT APPLICATION

(11) **EP 4 773 566 A1**
(43) Date of publication of application: **08.07.2026**
(21) Application number: 25209626.8
(22) Date of filing: 18.10.2025
(51) Int. Cl.: H04L 43/0864, H04L 12/437, H04L 12/42, H04L 43/10, H04L 43/16

(54) **LATENCY MEASUREMENT FOR HIGH-AVAILABILITY SEAMLESS REDUNDANCY (HSR) RINGS**

(30) Priority: 24.10.2024 US 202463711334 P; 14.07.2025 US 202519268086
(71) Applicant: Schweitzer Engineering Laboratories, Inc., Pullman, WA 99163 (US)
(72) Inventor: Rash, Andrew, Pullman, 99163 (US); Abboud, Rodrigo, Pullman, 99163 (US); Silveira, Mauricio, Pullman, 99163 (US); Miller, Andrew, Pullman, 99163 (US); Rajasekaran, Manodev, Pullman, 99163 (US); Goncalves, Eduardo, Pullman, 99163 (US)
(74) Representative: Smith, Jeremy Robert

(57) **Abstract**

In various examples, a host HSR device determines bidirectional latency values in an HSR ring without adding network traffic beyond the supervision frames mandated by the HSR protocol. The host HSR device receives its own supervision frames after the frames traverse the ring in both clockwise and counterclockwise directions. The host HSR device determines direction-specific roundtrip latency values, which are transmitted and used to, for example, set channel delay parameters in protective relays, assert alarms when latency or frame-return timeout thresholds are exceeded, and/or take other protective or reporting actions. In some examples, the larger of the two latency values is used to calculate a maximum roundtrip latency, which can be used to adjust or set a channel delay setting of a protective relay to ensure that the protective relay will continue to operate with the ring in a degraded state.

## Description

### RELATED APPLICATIONS

This application claims priority to US Non-Provisional Patent Application No. 19/268,086, titled LATENCY MEASUREMENT FOR HIGH-AVAILABILITY SEAMLESS REDUNDANCY (HSR) RINGS filed on 14 July 2025, which claims benefit under 35 U.S.C. § 119 to U.S. Provisional Patent Application No. 63/711,334, filed on October 24, 2024, titled "Method for HSR Ring Latency Measurement," which applications are hereby incorporated by reference in its entirety.

### TECHNICAL FIELD

This disclosure relates to measuring and monitoring latency in communication systems. More particularly, this disclosure relates to latency measurements in High-Availability Seamless Redundancy (HSR) rings.

### BRIEF DESCRIPTION OF THE DRAWINGS

FIG. 1A illustrates a simplified block diagram of a ring-based communication system, according to various embodiments.
FIG. 1B illustrates another simplified block diagram of a ring-based communication system, according to various embodiments.
FIG. 1C illustrates a simplified block diagram of the ring-based communication system of FIG. 1B in a degraded state, according to various embodiments.
FIG. 2 illustrates a report of latency measurement in a High-Availability Seamless Redundancy (HSR) ring communication system, according to one embodiment.
FIG. 3 illustrates a flow chart of a method for determining bidirectional latency information in an HSR ring network, according to one embodiment.
FIG. 4 illustrates an example block diagram of a host HSR device configured to determine, monitor, and report bidirectional latency information in an HSR ring network, according to one embodiment.

### DETAILED DESCRIPTION

In electrical power systems, protective intelligent electronic devices (IEDs) are used to ensure the reliability and safety of power distribution. Protective IEDs may be connected to various networks via independent network devices and/or integrated network device subsystems. Furthermore, monitoring, reporting, and/or other types of IEDs may be used to collect, measure, transfer, process, and/or report data relevant to the protection and/or monitoring of electrical power systems.

Systems of devices for the protection, control, and automation of industrial and utility equipment may use a communication network to facilitate various operations. The communication network may be configured to provide for the secure and reliable exchange of data among the various devices. Redundancies may be built into the devices and/or into the communication network itself. Modern electric power distribution and transmission systems may incorporate a variety of communication technologies that may be used in the protection, control, and automation of the power system. The communication networks carry information used for the proper assessment of power system conditions and for implementing control actions based on such conditions. In addition, some communications may be subject to time constraints because of the potential for rapid changes in conditions in the electric power system.

The term intelligent electronic device "IED" may refer to any microprocessor-based device that monitors, controls, automates, and/or protects monitored equipment within a system. Such devices may include, for example, remote terminal units, differential relays, distance relays, directional relays, feeder relays, overcurrent relays, voltage regulator controls, voltage relays, breaker failure relays, generator relays, motor relays, automation controllers, bay controllers, meters, recloser controls, communications processors, computing platforms, programmable logic controllers (PLCs), programmable automation controllers, input and output modules, motor drives, controllers for a wide-area monitoring system (WAMS), remedial action scheme (RAS) or special protection scheme (SPS) controllers, and the like. IEDs may be connected to a network, and communication on the network may be facilitated by networking devices, including, but not limited to, multiplexers, routers, hubs, gateways, firewalls, and switches. Furthermore, networking and communication devices may be incorporated into an IED or be in communication with an IED.

High-Availability Seamless Redundancy (HSR) rings provide continuous communication for digital substations and other industrial control networks. However, the path for a 100 Mbps ring can impose multiple milliseconds of one-way delay, depending on the number of nodes. For example, a delay of 1-2 milliseconds may exist in an HSR ring with 16 network devices operating at 100 Mbps. The same HSR ring may exhibit a delay of 4 milliseconds or more for IEC 61850 Sampled Values (SV) or IEC 61850 Generic Object Oriented Substation Event (GOOSE) communications. For example, for a digital substation using IEC 61850 Sampled Values and IEC 61850 GOOSE protocols, this may result in an additional 2-4 milliseconds of delay in tripping a circuit breaker. The 2-4 milliseconds delay may include 1-2 milliseconds to communicate the Sampled Values messages from a process interface unit (PIU) back to a protective relay and an additional 1-2 milliseconds to communicate a GOOSE message from the protective relay back to the PIU. Even in a healthy ring network, these latency values strain acceptability for electrical system monitoring and protection via IEDs. The latency values may be larger when a link or node fails, which may result in network traffic traversing the long way around the ring between two nodes.

Conventional latency tests that rely on packet taps, ICMP pings, or other upper-layer probes require extra hardware, inject additional traffic, and/or give hop-dependent results to represent the latency values for a healthy, fully functional HSR ring. For example, ICMP pings do not report if a ring is broken and, even with a healthy ring, always return a latency value associated with the shortest path. Conventional latency tests do not provide accurate, real-time operational latency values for degraded HSR rings in which a node or a link is non-functional in at least one direction.

The presently described systems and methods allow for the determination of bidirectional latency information of the ring without injecting additional traffic into the ring beyond supervision frames mandated by the HSR protocol. As described herein, a Host HSR device can determine bidirectional latency information within an operational HSR ring network in real time without adding any additional traffic that would not otherwise be present in the network.

A host HSR device, such as a protective relay, may be configured with hardware updates and/or custom software/firmware that repurposes the mandatory IEC 62439-3 supervision frames of the HSR protocol. That is, the HSR standard (IEC 62439-3) mandates that all HSR devices periodically inject a supervision frame into the ring. The injected supervision frames are normally used to advertise the sender's presence to the other nodes in the ring so those nodes can populate the optional HSR "nodes table." Individual devices do not, under the HSR standard, examine or use their own supervision frames.

In various embodiments of the presently described systems and methods, a host HSR device transmits its own multicast supervision frames clockwise from a first port (e.g., Port A) and counterclockwise from a second port (e.g., Port B). As described herein, the HSR device uses its own supervision frames to determine bidirectional latency values. Since the HSR ring delivers each frame back to the source, the host device may, for example, start a timer at the transmission of a supervision frame and stop the timer when that same supervision frame arrives on the opposite port. By timing the supervision frames in each direction, the host HSR device can determine two direction-specific roundtrip latency times without adding any packets or relying on any other equipment.

In various embodiments, each measured roundtrip latency value is compared with a user-selectable threshold (e.g., up to 3 milliseconds as required by IEC 61850-5 for tripping applications). If the counterclockwise and/or clockwise latency value(s) exceeds the threshold, or if a supervision frame fails to return within a timeout, the host HSR device may assert an alarm, transmit a report, take protective action, and/or otherwise respond. The approach operates at Layer 2 of the OSI model and depends only on the host HSR device's own frames. Accordingly, each node in the ring operating as a host HSR device reports the same true bidirectional latency values, regardless of its location. In contrast, upper-layer probes and approaches (e.g., those operating in Layer 3+ in the OSI model) generate latency values that vary with hop count and/or position of the node within the ring. Moreover, the presently described systems and methods can be used during commissioning and for continued monitoring of network health. Network settings, such as delay settings, can be adapted over time as the network conditions change after commissioning.

As described herein, the maximum latency for a healthy or normal HSR ring is half the maximum latency of a degraded HSR ring. This is especially relevant for latency-sensitive protocols like IEC 61850 SV and IEC 61850 GOOSE. Systems that use these protocols can be designed and configured to accommodate the degraded HSR ring latency. A system that only accommodates the healthy HSR ring latency may not work if a single failure occurs and the ring enters a degraded state. Monitoring the HSR latency also provides alarming capabilities during normal operation (e.g., an alarm may indicate that the ring is in a degraded state).

In various embodiments, a processing subsystem of a Host HSR device transmits both instantaneous latency values and/or a continuously updated maximum roundtrip time through an external interface, such as an engineering or SCADA interface. Commissioning tools may utilize the larger of the two values to set the SV channel delay setting of each relay. The correct channel delay ensures correct operation when the ring is in its slower single-contingency state.

During normal operation of the HSR ring, the same telemetry provides network-health insights. The system may monitor changes in the counterclockwise latency and the clockwise latency. The system may detect a simultaneous rise in both directions as an indication that the ring has opened. In contrast, the system may detect a rise in only one direction as an indication of an asymmetric forwarding defect or a transmit-only optical link. If the ring is open or partially open, the system will report the counter at its max value and/or report an unbounded value (i.e., because the frame was never received). Gradual growth of the stored maximum latency value may be used to detect bursty background traffic, such as large file transfers or SCADA polling that could crowd or otherwise delay latency-sensitive messages, such as GOOSE or SV messages. The system may report the detected conditions and/or take remedial actions.

In various embodiments, if a supervision frame is not returned before a timeout threshold, the timer may be stopped, and the roundtrip time may be marked as invalid. The system may report the occurrence and/or transmit an alarm indicating a total path failure. The approach described herein processes only two frames per supervision interval, thereby avoiding any additional resource burden of the optional HSR nodes table that tracks foreign supervision frames.

In one specific example, an HSR ring communication system includes a plurality of network devices arranged in a ring and exchanging data in accordance with the HSR protocol. A host HSR device is coupled to the ring through a first port in the clockwise direction and a second port in the counterclockwise direction. The HSR device includes a supervision-frame generator that transmits a first supervision frame from the first port around the ring clockwise and a second supervision frame from the second port around the ring counterclockwise. A timing subsystem contains a first timer that measures the clockwise roundtrip latency between transmission of the first supervision frame on the first port and reception of that frame on the second port.

The timing subsystem includes a second timer that measures the counterclockwise roundtrip latency between the transmission of the second supervision frame on the second port and the reception of that frame on the first port. A processing subsystem monitors both measured latencies and, through a communication interface, transmits one or both of the latency values for further use, generates various alarms based on measured conditions, and/or takes protective or corrective actions to address network conditions.

The embodiments of the disclosure can be understood by reference to the drawings, wherein like parts are designated by like numerals throughout. The components of the disclosed embodiments, as generally described and illustrated in the figures herein, could be arranged and designed in a wide variety of different configurations. Thus, the following detailed description of the embodiments of the systems and methods of the disclosure is not intended to limit the scope of the disclosure, as claimed, but is merely representative of possible embodiments of the disclosure. In addition, the steps of a method do not necessarily need to be executed in any specific order or even sequentially, nor do the steps need to be executed only once unless otherwise specified.

Several aspects of the embodiments described may be implemented as software modules, hardware components, and/or combinations thereof. As used herein, a software module or component may include any type of computer instruction or computer executable code located within a memory device and/or transmitted as electronic signals over a system bus or wired or wireless network. A software module or component may, for instance, comprise one or more physical or logical blocks of computer instructions. Software modules or components may comprise disparate instructions stored in different locations of a memory device, which together implement the described functionality of the module. Moreover, a module or component may comprise a single instruction or many instructions and may be distributed over several different code segments, among different programs, and across several memory devices. Some embodiments may be practiced in a distributed computing environment. For example, a module may include non-transitory computer-readable instructions implemented or executed by a processor to effectuate specific operations or functions. In some instances, the term "module" may be used interchangeably with the term "subsystem" and may refer to an operational device or component implemented with any combination of hardware, software, and/or firmware.

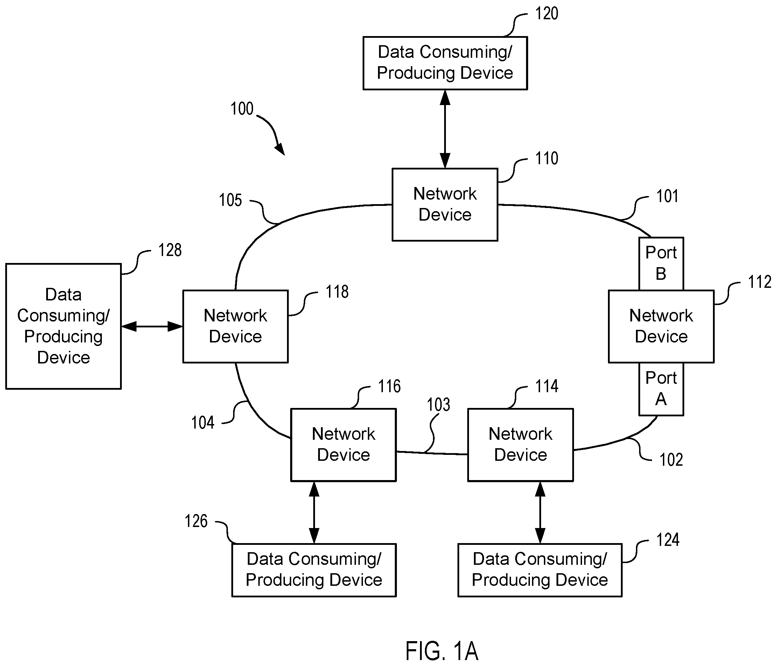

FIG. 1A illustrates a simplified block diagram of a ring-based communication system, according to various embodiments. Network devices 110, 112, 114, 116, and 118 are configured in a High-Availability Seamless Redundancy (HSR) ring 100. The HSR ring 100 is formed by a closed chain of physical links or ring segments 101, 102, 103, 104, and 105. Each ring segment 101-105 may be implemented with any full-duplex medium that supports the IEC 62439-3 HSR protocol, including, but not limited to, copper Ethernet cable, multimode or single-mode optical fiber, coaxial cable, industrial wireless links equipped with HSR-capable media converters, and/or other suitable physical networking infrastructure. Collectively, the segments 101-105 provide two counter-directional Layer-2 paths that allow network traffic to circulate clockwise and counterclockwise around the entire ring.

The illustrated embodiment includes five dual-port network devices 110-118 that reside on the HSR ring 100 and forward traffic in accordance with the HSR protocol. Ports A and B are shown on network device 112 but are not explicitly shown on the other network devices 110, 114, 116, and 118 to avoid obscuring the drawing. In various embodiments, a network device may be an intelligent electronic device (IED) such as a protective relay or controller, a merging unit (e.g., for Sampled Values communications), a process-bus switch or converter, a phasor-measurement unit, a programmable-logic controller, and/or other industrial or electrical system device or controller equipped with a dual-port HSR interface. In some embodiments, a network device 110-118 may be a stand-alone HSR switch or router that interconnects non-HSR equipment to the HSR ring 100. In some embodiments, a network device 110-118 may be a RedBox or redundancy box as described in the context of the HSR standard. Each network device receives network traffic (e.g., a frame) on one port, duplicates it, and retransmits the two copies in opposite directions so that the loss of any single device or link does not interrupt delivery.

Data consuming/producing devices 120, 124, 126, and 128 are illustrated in communication with network devices 110, 114, 116, and 118, respectively. These data-consuming/producing devices may be, for example, single-port data devices that attach to the HSR ring 100 via the corresponding intermediary network devices. For example, a data-consuming/producing device may be a GOOSE station-bus relay, a SCADA remote-terminal unit, a SCADA server, a human-machine interface, a synchrophasor concentrator, a sensor, an actuator node, etc. In the illustrated embodiment, each network device 110-118 injects mandatory HSR supervision frames to announce its presence.

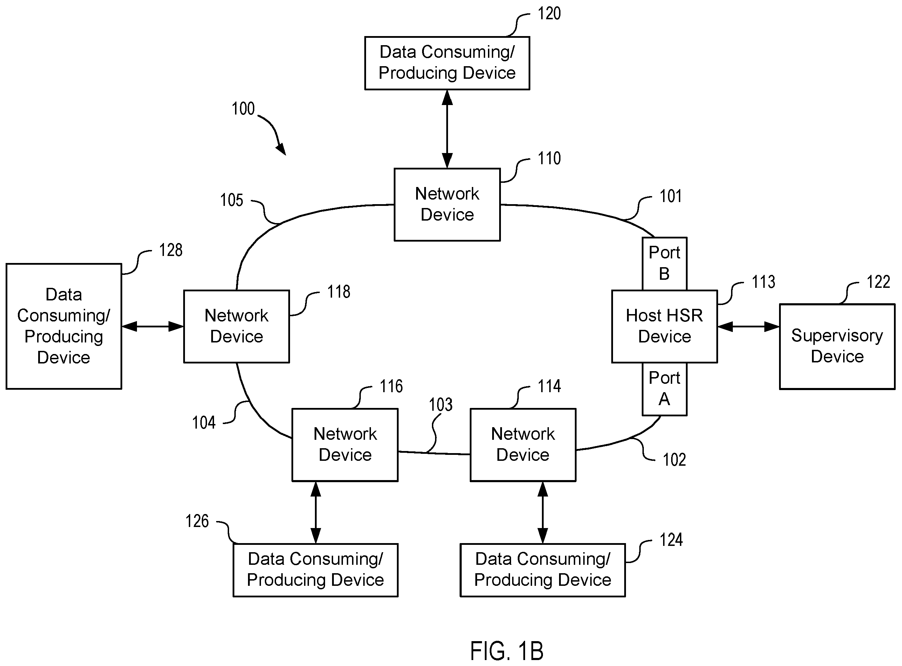

FIG. 1B illustrates another simplified block diagram of a ring-based communication system in which one of the network devices operates as a host HSR device 113 to determine bidirectional latency information of the ring without injecting additional traffic into the HSR ring 100 beyond the supervision frames mandated by the HSR protocol. As illustrated, the host HSR device 113 is coupled to ring segment 101 through Port B and to segment 102 through Port A. The host HSR device 113 may be, for example, a protective relay, an HSR-capable Ethernet switch, or a purpose-built monitoring module. As described herein, the host HSR device 113 may start a timer when the supervision frame is injected on each port, and record the time until the injected supervision frame is received on the opposite port. The host HSR device 113 may use the measured time interval to determine both a clockwise roundtrip latency and a counterclockwise roundtrip latency. A supervisory device 122, such as, for example, an engineering workstation, a network-management server, or a SCADA/DCS gateway, exchanges configuration data and receives latency reports or alarms from the host HSR device 113 via any suitable management channel (e.g., serial, MMS, DNP3, IEC 61850, or a proprietary protocol).

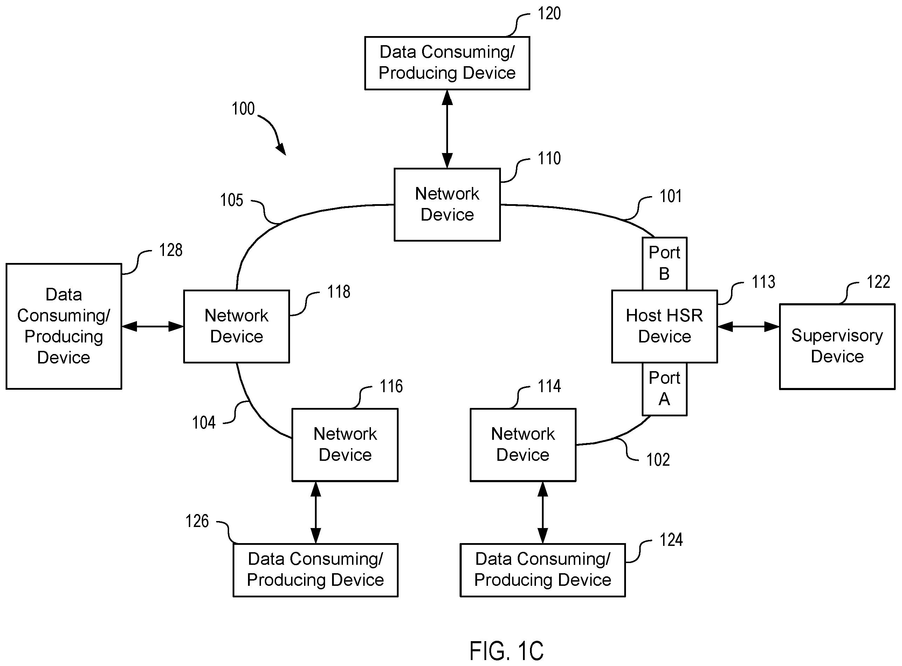

FIG. 1C illustrates a simplified block diagram of the ring-based communication system of FIG. 1B in a degraded state with segment 103 of the HSR ring 100 broken or missing. Network traffic now follows the single remaining path through segments 101, 102, 104, and 105. The latency between host HSR device 113 and network device 116 is significantly increased. The illustrated example only includes five network devices 110-118 in the HSR ring 100, so the additional delay is modest. However, in HSR rings that include a larger number of HSR nodes, the latency introduced by each extra hop accumulates, and the maximum round-trip time measured in the degraded state can increase proportionally.

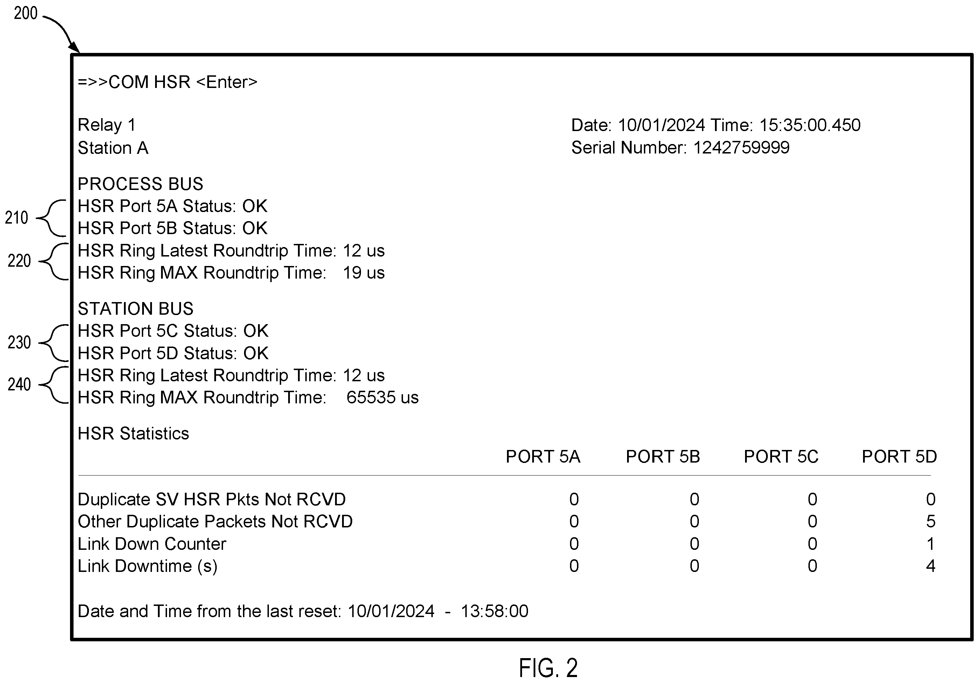

FIG. 2 illustrates a report 200 of latency measurements in an HSR ring communication system, according to one embodiment. The report 200 is an example of a textual diagnostic screen that a host HSR device may present after an operator issues the "COM HSR" ASCII command. The report 200 includes information for a process bus network interface and a station bus network interface.

The process-bus port status 210 includes two status lines that correspond to the dual-port HSR interface dedicated to process-bus traffic. Specifically, "HSR Port 5A Status: OK" reports the link condition on the counterclockwise port, and "HSR Port 5B Status: OK" reports the link condition on the clockwise port. In some embodiments, the lines may be highlighted or color-coded to indicate the status. For example, green may be used to indicate a healthy status, red may be used to indicate a disconnected status, and yellow may be used to indicate a problem (e.g., a missing peer or excessive frame errors).

The process-bus latency values 220 include two latency metrics calculated using the systems and methods described herein. The "HSR Ring Latest Roundtrip Time: 12 µs" is the most recent clockwise-or-counterclockwise roundtrip time measured when the Host HSR device's own supervision frames returned. "HSR Ring MAX Roundtrip Time: 19 µs" is a persistent register that stores the greatest value observed since the last power-up, since an operator-initiated reset, or since the last automatic reset (e.g., per a periodic reset configuration setting). In some embodiments, this value (or an additional value) may provide a rolling maximum to capture the worst-case bursts caused by background MMS transfers or other traffic. Accordingly, this value may be used as a conservative figure to set or adjust relay channel delay settings.

The station-bus port status 230 repeats the two-line link-status report for the second HSR interface, which carries station-bus traffic. "HSR Port 5C Status: OK" reflects the counterclockwise path, while "HSR Port 5D Status: OK" reflects the clockwise path. The indications may change from "OK" to "FAIL" or "WARN" if the Host HSR device does not receive its own supervision frame within a predetermined timeout period and/or if the measured latency exceeds a user-selectable threshold (for example, 1-5 milliseconds in a 100 Mbps HSR ring).

The station-bus latency values 240 contains the corresponding latency metrics for the station-bus ring. The "Latest Roundtrip Time" shows the most recently measured value (illustrated as 12 µs), and the "HSR Ring MAX Roundtrip Time" retains the highest observed value since the last reset. When the ring enters the degraded state depicted in FIG. 1C, the latest value will likely increase significantly, and, in some instances, the maximum value may be updated.

The report 200 is an example of how a host HSR device, according to the systems and methods described herein, uses the existing supervision frames that are mandatory under the HSR protocol to measure latency and generate actionable diagnostics (e.g., via direction-specific latency measurement, maximum-value tracking, threshold comparison, and alarm reporting, as described herein).

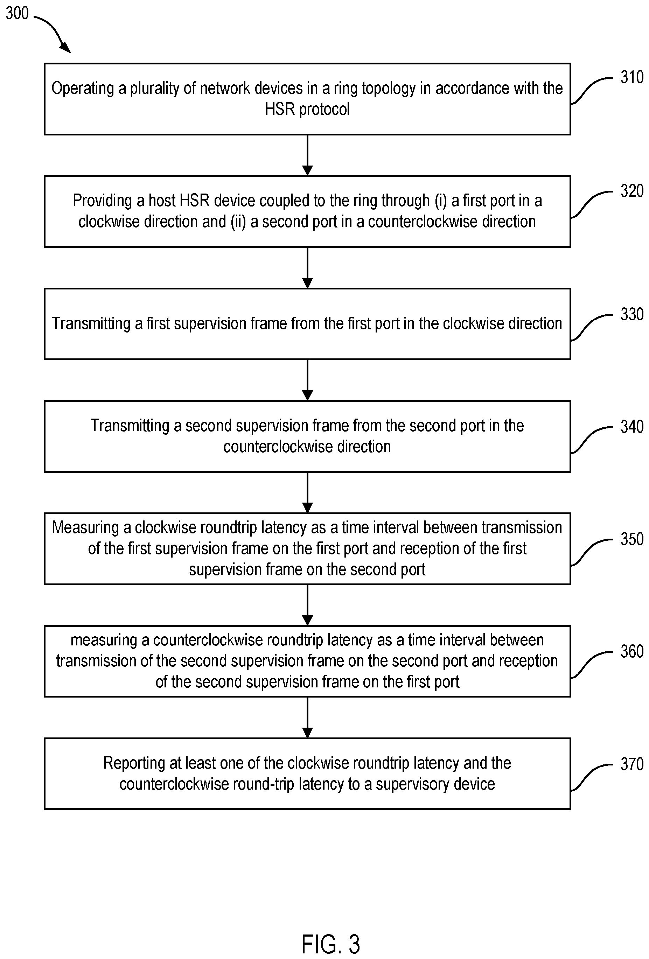

FIG. 3 illustrates a flow chart of a method 300 for determining bidirectional latency information in an HSR ring network, according to one embodiment. A host HSR device may execute the method 300 to determine, monitor, and report the bidirectional latency of an HSR ring. Although the blocks are shown in a particular vertical order, one or more steps may be omitted, reordered, or carried out concurrently. The arrows merely denote a logical progression. The method may include operating, at 310, a plurality of network devices in a ring topology using the HSR protocol. Each device receives ordinary data frames, duplicates them, and forwards the copies in opposite directions so that every destination receives at least one copy, even if a single link or node fails. The host HSR device, in its normal run state, must inject a supervision frame on each port at the standard supervision interval (e.g., every one second or other specified supervision interval).

A host HSR device is coupled to the ring, at 320, through a first port that transmits traffic clockwise and a second port that transmits traffic counterclockwise. The host HSR device transmits, at 330, its own supervision frame from the first port into the clockwise path. The act introduces no traffic beyond what the HSR protocol already mandates and thus does not inject any additional overhead onto the HSR ring. A first timer in the timing subsystem may be started simultaneously with the transmission.

The host HSR device transmits, at 340, a second supervision frame counterclockwise. The host transmits the second supervision frame from the second port into the counterclockwise path and concurrently starts a second independent timer. When the clockwise-directed supervision frame returns to the host on the opposite port, the first timer is stopped, at 350. The elapsed value represents the clockwise roundtrip latency of the ring at that instant. If the frame fails to return before a configurable timeout period, the timer is stopped, and the latency value is marked invalid. Likewise, when the counterclockwise supervision frame returns to the opposite port, the second timer is stopped, and its value is recorded as the counterclockwise roundtrip latency, at 360. Normal variation (e.g., jitter) is expected due to the contention for the network at each node. However, the two latency figures may differ by more than an expected jitter threshold amount when the ring is in a partially degraded or asymmetric state, for example, when one fiber strand supports transmit-only operation.

The host HSR device transmits, at 370, at least one of or both measured latencies and/or the greater of the two latency values. For example, the host HSR device may report or otherwise transmit the latency information to a supervisory device such as an engineering workstation, SCADA/DCS gateway, or network management server. In some embodiments, the values are displayed in a human-readable COM-HSR report (e.g., as shown in FIG. 2).

Although not illustrated, in some embodiments, the host HSR device may compare each latency with a threshold value (e.g., a value between approximately one and five milliseconds for a 100 Mbps ring) and assert an alarm if the threshold is exceeded or if a frame times out. Moreover, the host HSR device may continuously update a maximum roundtrip latency register to preserve the highest value observed since the last reset. A rolling maximum latency value may be particularly useful during commissioning to capture burst-induced spikes caused by activities such as MMS file transfers. This rolling maximum latency value may be used as a conservative figure for setting channel delay parameters in protective relays.

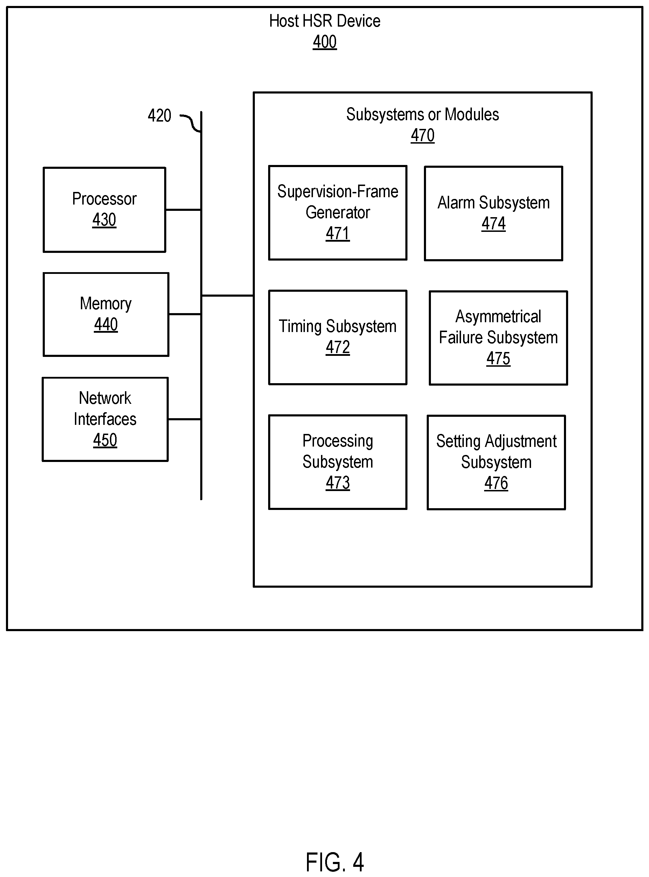

FIG. 4 illustrates an example block diagram of a host HSR device 400 configured to determine, monitor, and report bidirectional latency information in an HSR ring network, according to one embodiment. The host HSR device 400 may be configured to generate supervision frames, measure direction-specific roundtrip latency in an HSR ring, evaluate the results, and provide alarms or setting information to external systems, and/or directly adjust setting information or take other protective actions. A high-speed internal bus 420 interconnects a processor 430 that executes program instructions, memory 440 that stores firmware, configuration data, and the most recent and maximum latency values, and dual network interfaces 450 that form the clockwise and counterclockwise connections to the HSR ring, and optionally includes a management port or other external interface.

A functional block 470 groups the subsystems that perform the various functions, methods, and actions described herein. The functional block 470 may include and/or be otherwise implemented using any combination of hardware, firmware, and software, including non-transitory computer-readable media with instructions stored thereon for execution by the processor 430. A supervision-frame generator 471 constructs the supervision frames under the HSR protocol that include the device's source MAC address and transmits one copy from each HSR port at the configured supervision interval.

Again, these frames are mandated by the standard and thus do not result in any additional diagnostic traffic being injected into the network. A timing subsystem 472 starts a first high-resolution timer when the clockwise supervision frame leaves Port B and stops that timer when the same frame returns on Port A. A second timer is started when the counterclockwise supervision frame leaves Port A and is stopped when that same frame returns on Port B. The elapsed time values constitute the clockwise and counterclockwise roundtrip latencies. If either frame fails to return before a configurable timeout period, the corresponding timer is stopped, and its result is flagged invalid.

A processing subsystem 473 reads the two latency values, compares each with a programmable threshold, and updates a persistent register that stores the greatest value observed since the last reset. A rolling maximum value may be calculated that captures burst-induced spikes caused by background MMS file transfers or other traffic. Whenever a latency value exceeds its threshold or a frame times out, an alarm subsystem 474 may assert LEDs, dry-contact outputs, or protocol alarm bits. The alarm may be used to notify network operators of cable breaks, mis-wired ports, and/or excessive store-and-forward delays.

In some embodiments, an asymmetrical failure subsystem 475 classifies faults in which only one of the two directions is outside of normal limits. The asymmetrical failure subsystem 475 may be used to detect, for example, transmit-only optical strands or a forwarding engine that has failed in one direction. The situations would normally be undetected by upper-layer tools.

The setting adjustment subsystem 476 transmits or directly uses the instantaneous latency values, the maximum latency, and/or the rolling maximum latency to pre-populate or automatically tune channel delay, hold-off, or quality-of-service settings in downstream intelligent electronic devices. The settings may be configured to accommodate worst-case scenarios and/or a degraded HSR ring to ensure that protection and control functions remain secure even when the ring is forced into single-path operation.

It is appreciated that two or more of the systems, subsystems, components, modules, etc., that are described herein may be combined as a single system, subsystem, module, or component. Moreover, many of the systems, subsystems, components, and modules may be duplicated or further divided into discrete systems, subsystems, components, or modules to perform subtasks of those described herein. Any of the embodiments described herein may be combined with any combination of other embodiments described herein.

The components of some of the disclosed embodiments are described and illustrated in the figures herein. Many portions thereof could be arranged and designed in a wide variety of different configurations. Furthermore, the features, structures, and operations associated with one embodiment may be applied to or combined with the features, structures, or operations described in conjunction with another embodiment. In many instances, well-known structures, materials, or operations are not shown or described in detail to avoid obscuring aspects of this disclosure. Many of the illustrations are provided in a block diagram format to illustrate a general configuration and may not be drawn to scale. The right to add any described embodiment or feature to any one of the figures and/or as a new figure is explicitly reserved.

This disclosure has been made with reference to various examples and embodiments, including the best mode. However, those skilled in the art will recognize that changes and modifications may be made to the exemplary embodiments without departing from the scope of the present disclosure. While the principles of this disclosure have been shown in various embodiments, many modifications of structure, arrangements, proportions, elements, materials, and components may be adapted for a specific environment and/or operating requirements without departing from the principles and scope of this disclosure. These and other changes or modifications are intended to be included within the scope of the present disclosure, along with every permutation of the claims filed herewith.

## Claims

1. A High-Availability Seamless Redundancy (HSR) ring communication system, comprising:
a plurality of network devices arranged in a ring and configured to communicate according to an HSR protocol; and
a host HSR device configured to determine bidirectional latency information of the ring without injecting additional traffic into the ring beyond supervision frames mandated by the HSR protocol, the host HSR device communicatively coupled to the ring via (i) a first port in a clockwise direction and (ii) a second port in a counterclockwise direction, the host HSR device including:
a supervision-frame generator configured to (i) transmit a first supervision frame via the first port around the ring in the clockwise direction and (ii) transmit a second supervision frame via the second port around the ring in the counterclockwise direction,
a timing subsystem with timers to determine two latency values including a (i) first timer configured to measure a clockwise roundtrip latency based on a transmit time of the first supervision frame by the first port and a receive time of the first supervision frame by the second port and (ii) a second timer configured to measure a counterclockwise roundtrip latency based on a transmit time of the second supervision frame by the second port and a receive time of the second supervision frame by the first port, and
a processing subsystem configured to (i) monitor the two determined latency values and (ii) transmit at least one of the two determined latency values via a communication interface.

2. The communication system of claim 1, further comprising a supervisory device to receive latency values from the host HSR device via the communication interface, wherein the supervisory device adjusts a channel delay setting of a protective relay using at least one of the clockwise roundtrip latency and the counterclockwise roundtrip latency transmitted by the processing subsystem.

3. The communication system of claim 1, wherein the host HSR device is configured to assert an alarm in response to:
the roundtrip latency exceeding a threshold value, and
a supervision frame failing to return within a timeout period.

4. The communication system of claim 1, wherein the processing subsystem transmits both the clockwise roundtrip latency and the counterclockwise roundtrip latency via the communication interface.

5. The communication system of claim 1, wherein the processing subsystem is configured to report that the ring is in a degraded state based on an asymmetrical failure in the ring detected when only one of the clockwise roundtrip latency and the counterclockwise roundtrip latency exceeds a threshold value.

6. The communication system of claim 5, wherein the threshold value is between approximately 1 millisecond and 5 milliseconds for a ring operating at 100 megabits per second.

7. The communication system of claim 1, wherein the HSR protocol corresponds to a version of an HSR standard set forth in IEC 62439-3.

8. The communication system of claim 1, wherein the host HSR device comprises a protective relay configured to publish and receive IEC 61850 GOOSE and SV messages.

9. The communication system of claim 1, wherein each of the first and second supervision frames has a source media-access-control (MAC) address of the host HSR device.

10. The communication system of claim 1, wherein the processing subsystem is further configured to determine a maximum roundtrip latency value as the greater of the clockwise roundtrip latency and the counterclockwise roundtrip latency.

11. The communication system of claim 10, further comprising a supervisory device to receive the maximum roundtrip latency value via the communication interface, and
wherein the supervisory device uses the maximum roundtrip latency value to adjust a channel delay setting of a protective relay, such that the channel delay setting of the protective relay allows for continued functionality with the ring in a degraded state.

12. The communication system of claim 10, further comprising a user-accessible command interface, wherein the processing subsystem is configured to:
maintain a maximum roundtrip latency value until the command interface receives a reset command, and
clear the maximum roundtrip latency value in response to the reset command.

13. A method of determining bidirectional latency in a High-Availability Seamless Redundancy (HSR) ring network, the method comprising:
operating a plurality of network devices in a ring topology in accordance with an HSR protocol;
providing a host HSR device coupled to the ring through (i) a first port in a clockwise direction and (ii) a second port in a counterclockwise direction; and
via the host HSR device and without injecting any traffic beyond supervision frames mandated by the HSR protocol:
transmitting a first supervision frame from the first port in the clockwise direction;
transmitting a second supervision frame from the second port in the counterclockwise direction;
measuring a clockwise roundtrip latency as a time interval between transmission of the first supervision frame on the first port and reception of the first supervision frame on the second port;
measuring a counterclockwise roundtrip latency as a time interval between transmission of the second supervision frame on the second port and reception of the second supervision frame on the first port; and
reporting at least one of the clockwise roundtrip latency and the counterclockwise roundtrip latency to a supervisory device.

14. The method of claim 13, further comprising adjusting a channel delay setting of a protective relay with the supervisory device in response to the reported roundtrip latency.

15. The method of claim 13, further comprising, at the host HSR device, asserting an alarm in response to (i) the roundtrip latency exceeding a threshold value or (ii) a supervision frame failing to return within a timeout period.

16. The method of claim 13, further comprising identifying a degraded state of the ring based on an asymmetric failure in which only one of the clockwise roundtrip latency and the counterclockwise roundtrip latency exceeds a threshold value.

17. The method of claim 13, further comprising calculating a maximum roundtrip latency value as the greater of the clockwise roundtrip latency and the counterclockwise roundtrip latency.

18. The method of claim 17, further comprising transmitting the maximum roundtrip latency value to the supervisory device, and adjusting a channel delay setting of a protective relay based on the maximum roundtrip latency value such that the relay continues to operate when the ring is degraded.

19. The method of claim 17, further comprising: maintaining a maximum roundtrip latency value until a user-accessible command interface receives a reset command; and clearing the maximum roundtrip latency value in response to the reset command.

20. A non-transitory computer-readable medium storing instructions that, when executed by one or more processors of a host HSR device coupled to a High-Availability Seamless Redundancy (HSR) ring via (i) a first port in a clockwise direction and (ii) a second port in a counterclockwise direction, cause the host HSR device to perform operations to determine bidirectional latency information of the ring without injecting additional traffic into the ring beyond supervision frames mandated by an HSR protocol, the operations comprising:
transmitting a first supervision frame from the first port in the clockwise direction and a second supervision frame from the second port in the counterclockwise direction;
measuring a clockwise roundtrip latency as a time interval between transmitting the first supervision frame on the first port and receiving that first supervision frame on the second port;
measuring a counterclockwise roundtrip latency as a time interval between transmitting the second supervision frame on the second port and receiving that second supervision frame on the first port; and
reporting at least one of the clockwise roundtrip latency and the counterclockwise roundtrip latency to a supervisory device.
